# EUROPÄISCHE PATENTSCHRIFT

(11) **EP 2 298 628 B1**
(45) Veröffentlichungstag und Bekanntmachung des Hinweises auf die Patenterteilung: **11.06.2014**
(21) Anmeldenummer: 10007137.2
(22) Anmeldetag: 10.07.2010
(51) Int. Cl.: B62D 25/02, B62D 25/20, B62D 21/15, B62D 25/04

(54) **Fahrzeukarosserieaufbau im Bereich A-Säule unten und Schweller und zugeordnetes Fertigungsverfahren**
Vehicle body structure in the area of the lower A pillar, side sill and method for producing the same
Montage de carrosserie de véhicule au niveau de la zone en bas de la colonne A et longeron lateral ainsi que procédé de fabrication correspondant

(30) Priorität: 18.09.2009 DE 102009042188
(43) Veröffentlichungstag der Anmeldung: 23.03.2011
(73) Patentinhaber: Audi AG, 85045 Ingolstadt (DE)
(72) Erfinder: Weigl, Willi, 85095 Zandt (DE); Schromm, Martin, 85080 Gaimersheim (DE); Kühl, Sönke, 69120 Heidelberg (DE); Neufeldt, Christian, 74177 Bad Friedrichshall (DE)
(74) Vertreter: Engelhardt, Harald

(56) Entgegenhaltungen:
- EP-A1- 1 980 471
- EP-A1- 2 014 539
- DE-A1- 19 528 874
- DE-U1- 9 412 850

## Beschreibung

Die Erfindung betrifft einen Fahrzeugkarosserieaufbau im Bereich A-Säule unten und Schweller nach dem Oberbegriff des Anspruchs 1.

Das Karosseriegewicht ist eine wesentliche Größe für den Kraftstoffverbrauch und die Betriebskosten eines Kraftfahrzeugs. Es ist daher allgemein bekannt anstelle des konventionellen Karosseriebaus mit Stahlblechen Leichtmetallelemente zu verwenden, um möglichst gewichtsgünstige und damit verbrauchsmindernde und umweltschonende Karosserien herzustellen. Es ist auch allgemein bekannt, dass Leichtmetallelemente hinsichtlich der Verarbeitung, der Steifigkeit und der Verbindungstechnik untereinander und zu anderen Materialen Besonderheiten gegenüber konventioneller Stahlkarosserien aufweisen, die dazu geführt haben, dass moderne Karosserien aus einem Material-Mix bestehen. Die technische Aufgabe besteht nun allgemein darin, an den unterschiedlichen Stellen einer Karosserie Karosserieelemente aus dafür geeigneten Materialen vorzusehen, zu kombinieren und zu verbinden, mit denen einerseits ein Leichtbau möglich ist, andererseits die oft divergierende Forderung nach hoher Steifigkeit erfüllt wird und zudem bei einem insgesamt kostengünstigen Aufbau eine möglichst einfache Montage durchführbar ist. Als unterschiedliche im Karosseriebau im Sinne der vorstehenden Gegebenheiten verwendete Materialien sind allgemein Stahlbleche unterschiedlicher Qualitäten und Blechstärken, insbesondere Bleche aus Tiefziehstählen, höherfesten Stählen und warm geformten Stählen bekannt sowie Leichtmetalle und Leichtmetalllegierungen aus Aluminium und Magnesium.

Aus der DE 101 47 117 B4 ist ein Fahrzeugkarosserieaufbau im Bereich A-Säule unten und Schweller bekannt mit jeweils einer A-Säule an beiden Karosserieseiten, welche in ihrem Säulenaufbau im Schwellerbereich ein etwa vertikal und in Fahrzeuglängsrichtung (Y-Fläche) ausgerichtetes A-Säulen-Unteninnenstahlblech und ein dazu beabstandetes A-Säulen-Untenaußenstahlblech aufweist. Zudem ist ein angeschlossener Schweller als Längshohlträger verwendet mit einem darin aufgenommenen längsverlaufenden Schwellerverstärkungsprofil. Als Schwellerverstärkung ist hier ein Rohr mit Sollbruchstellen im Längshohlträger eingebracht, das sich über endseitige Stützplatten an angrenzenden Karosseriebauteilen abstützt. Ein solcher Schwelleraufbau ist einerseits aufwendig und kostenintensiv, zudem ist er relativ schwer und erfordert einen großen Bauraum.

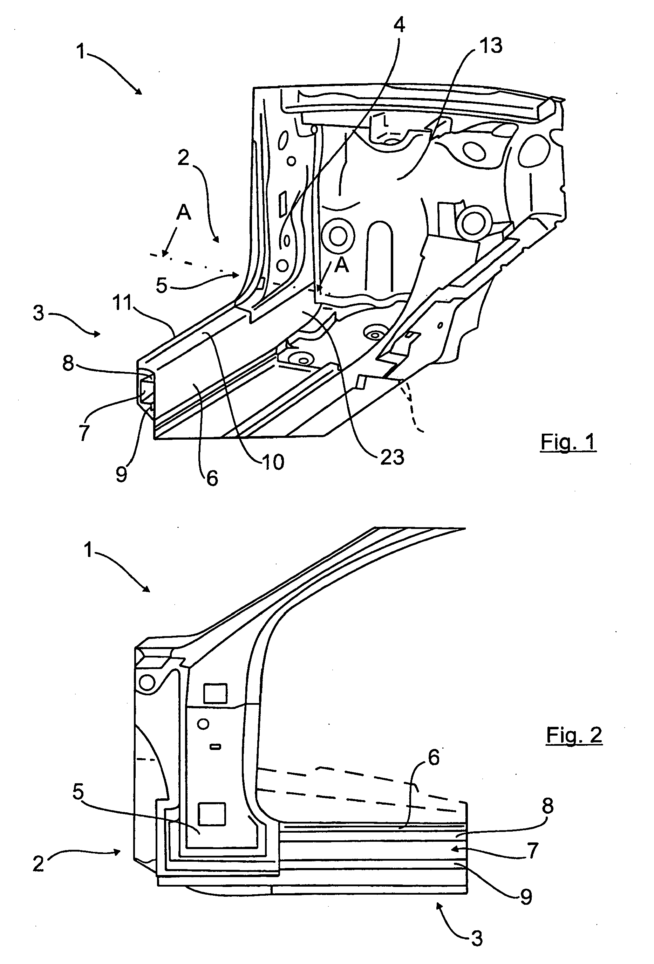

Die DE 195 28 874 A1 betrifft eine Tragstruktur eines Fahrzeugs mit durchgehenden Längsträgern, A-Säulen, B-Säulen, C-Säulen, Querträgern sowie Dachsäulen. Ein Türschweller weist eine Außenschale, eine Innenschale sowie ein Stegblech auf (Fig. 2), wobei das Stegblech den nach Art eines Hohlprofilträgers ausgebildeten Türschweller in eine erste Hohlkammer und eine zweite Hohlkammer unterteilt. An diesen Türschweller ist ein Sitzquerträger angeschlossen, der bis zu einem Mittentunnel reicht. Als Verstärkungsmittel zur Übertragung einer Aufprallkraft in diesem Bereich ist eine Profilanordnung vorgesehen, deren wesentliche Elemente ein sich längs erstreckendes Profilteil (Hutprofil) und ein Distanzprofil sind. Diese bilden hier mit dem Stegblech zusammen einen Bauteilverbund und können gegebenenfalls mit wenigstens einem der beiden Schalen des Türschwellers verbunden sein. Sowohl das hutförmige Profilteil als auch das Distanzprofil weisen flächig ausgebildete Krafteinleitungsbereiche auf, die entweder mit den umgebenden Blechschalen direkt verbunden sind oder zu diesen nur einen geringfügigen Abstand aufweisen. Durch eine Verschränkung der Symmetrieachsen soll die gesamte Profilanordnung im Türschwellerbereich dergestalt versteift werden, dass auch bei hohen Aufprallkraftbelastungen keine nennenswerte Deformation des Türschwellers durch Stauchung erfolgt. Dadurch soll sich der Türschweller mit Bezug auf die Insassenzelle wie ein Schutzschild verhalten.

Weiter zeigt die EP 2 014 539 A1 lediglich eine Kraftfahrzeugkarosserie mit einem seitlichen Schweller, der ein Blechinnenteil und ein mit diesem verbundenes Blechaußenteil aufweist, zwischen denen ein Verstärkungsteil in Form eines Hutprofils angeordnet ist. Dieses Hutprofil erstreckt sich ohne außenschalenseitige Abstützung des Hutbereichs im Hutprofilbasisbereich vom A-säulenseitigen Schwellerbereich bis nach hinten zur C-Säule.

Aufgabe der Erfindung ist es, einen Fahrzeugkarosserieaufbau im Bereich A-Säule unten und Schweller zur Verfügung zu stellen, mittels der eine hohe Schwellersteifigkeit bei guter Crashfunktion in Verbindung mit einer gewichtsgünstigen montagefreundlichen Lösung erzielt werden kann.

Diese Aufgabe wird erfindungsgemäß dadurch gelöst, dass der Schweller ein Schweller-Innenstahlblech aufweist mit einer Schwellerinnenfläche, die fluchtend zur Fläche des A-Säulen-Unteninnenstahlblechs als erste Schubfläche (erste Y-Fläche) verläuft. Als Schwellerverstärkungsprofil ist ein Hutstahlprofil verwendet, das mit den Huträndern außen am Schwellerinnenstahlblech verbunden ist. Zudem ist das Schwellerinnenstahlblech an der Oberseite nach außen in der Breite der Hutprofilhöhe zu einer etwa horizontal verlaufenden Schulter und anschließend zu einer vertikal nach oben stehenden Türdichtflansch gebogen. Dabei verläuft die vertikal ausgerichtete Hutdecke des Hutstahlprofils fluchtend zur Türflanschfläche des im A-Säulen-Untenaußenstahlblechs weiter geführten Türflansches als zweite Schubfläche (zweite Y-Fläche).

Durch diese beiden längsausgerichteten Schubflächen in Verbindung mit einem integral den Schweller mit bildenden Schwellerverstärkungsprofil wird bei leichter Bauweise eine hohe Stabilität der Fahrgastzelle in diesem Bereich erhalten. Bei einem Frontcrash mit einer Verformung des Vorderwagens wird durch die beiden parallelen in Fahrzeuglängsrichtung ausgerichteten Schubflächen ein dagegen drängendes Vorderrad besonders effektiv ohne Verformung der Fahrgastzelle abgestützt.

Bei einer zweckmäßigen konkreten Ausführung wird das Schwellerinnenstahlblech im oberen Bereich vom A-Säulen-Unteninnenstahlblech umgriffen und das Schwellerinnenstahlblech wird darunter mit einem Fortsatz bis zu einer vorzugsweise aus Aluminiumblech hergestellten Stirnwand in Längsrichtung fluchtend weitergeführt.

Eine hohe Stabilität bei gewichtsgünstigem Abbau wird insbesondere dadurch erreicht, dass das Schwellerinnenstahlblech aus warmgeformtem Stahl besonders hoher Festigkeit und das A-Säulen-Unteninnenstahlblech, das A-Säulen-Untenaußenstahlblech und das Hutstahlprofil aus höherfestem Stahl hergestellt sind, wobei alle diese Elemente mit üblichen Schweißverbindungen vorzugsweise durch Widerstandspunktschweißen verbunden werden.

Zur Vermeidung von ungünstigen Mehrfachmaterialauflagen in Schweißbereichen wird zudem vorgeschlagen die Schweißverbindungen in der Höhe (Z-Achse) am Schwellerinnenstahlblech zu entzerren und insbesondere die weiteren Schweißverbindungen höhenversetzt zu den Schweißverbindungen der Hutränder des Hutstahlprofils vorzusehen.

Konkret liegt dazu das A-Säulen-Untenaußenstahlblech am Hutstahlprofil an und übergreift dieses nach unten, wobei es unterhalb des Hutrandes am Schwellerinnenstahlblech mit einem Schweißflansch anliegt, wo es durch Widerstandspunktschweißen festgelegt ist. Das Schwellerinnenstahlblech steht darüberhinaus nach unten mit einem Überstand vor, an dem durch Nietverbindungen vorzugsweise durch Vollstandsnieten ein Unterbodenaluminiumblech mit einem Nietflansch angeschlossen ist. Dies stellt eine besonders vorteilhafte Höhenentzerrung der Anbindungen dar mit einer geeigneten Anbindung eines gewichtsgünstigen Unterbodens.

Anhand einer Zeichnung wird die Erfindung weiter erläutert.

Es zeigen:
- Fig. 1: einen Blick von schräg oben innen auf einen Fahrzeugkarosserieaufbau im Bereich A-Säule unten und Schweller;
- Fig. 2: eine Ansicht von seitlich außen auf diesen Bereich; und
- Fig. 3: einen schematischen Schnitt entlang der Linie A-A aus Fig. 1.

In Fig. 1 ist von oben innen gesehen ein Fahrzeugkarosserieaufbau 1 im Bereich einer A-Säule 2 und des Anschlussbereichs zu einem teilweise dargestellten Schweller 3 gezeigt. Fig. 2 zeigt diesen Bereich von seitlich außen.

Die A-Säule 2 besteht aus einem A-Säulen-Unteninnenstahlblech 4 und einem A-Säulen-Untenaußenstahlblech 5.

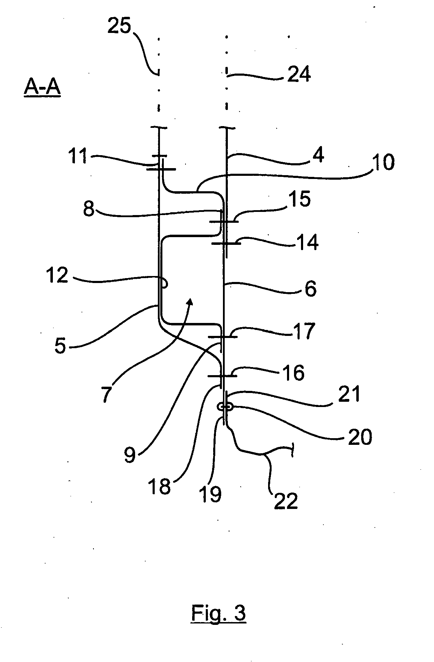

Der Schweller 3 weist ein Schwellerinnenstahlblech 6 auf mit einer Schwellerinnenfläche, die fluchtend zur Fläche des A-Säulen-Unteninnenstahlblechs 4 als erste Schubfläche (Y-Fläche 24) verläuft, wie dies insbesondere auch aus dem schematischen Schnitt der Fig. 3 zu entnehmen ist.

Als Schwellerverstärkungsprofil ist ein Hutstahlprofil 7 verwendet, das mit den Huträndern 8, 9 durch Widerstandspunktschweißen außen am Schwellerinnenstahlblech 6 angeschlossen ist.

Das Schwellerinnenstahlblech 6 ist an der Oberseite nach außen in der Breite der Hutprofilhöhe zu einer etwa horizontal verlaufenden Schulter 10 und anschließend zu einem vertikal nach oben stehenden Türdichtflansch 11 gebogen. Die vertikal ausgerichtete Hutdecke 12 des Hutstahlprofils 7 verläuft fluchtend zur Türflanschfläche des im A-Säulen-Untenaußenstahlblechs 5 weiter geführten Türflansches 11 als zweite Schubfläche (zweite Y-Fläche 25).

Das Schwellerinnenstahlblech 6 wird im oberen Bereich vom A-Säulen-Unteninnenstahlblech 4 mit einem Rand übergriffe (siehe Fig. 1), wobei das Schwellerinnenstahlblech 6 unter diesem Rand mit einem Fortsatz 23 fluchtend bis zu einer Stirnwand 13 aus Aluminiumblech weitergeführt ist.

Das Schwellerinnenstahlblech 6 ist aus warm geformtem Stahl und das A-Säulen-Unteninnenstahlblech 4, das A-Säulen-Untenaußenstahlblech 5 und das Hutstahlprofil 7 sind dagegen aus höherfestem Stahl hergestellt.

Wie aus Fig. 3 ersichtlich sind die Schweißverbindungen in der Höhe entzerrt und liegen höhenversetzt am Schwellerinnenstahlblech 6. Insbesondere liegt die Schweißverbindung 14 zwischen dem A-Säulen-Unteninnenstahlblech 4 und dem Schwellerinnenstahlblech 6 unter der Schweißverbindung 15 des oberen Hutrandes 8. Die Schweißverbindung 16 zwischen dem A-Säulen-Untenaußenstahlblech und dem Schwellerinnenstahlblech 6 liegt unterhalb der Schweißverbindung 17 des unteren Hutrandes 9. Dabei übergreift das A-Säulen-Untenaußenstahlblech 5 anliegend das Hutstahlprofil 7 und liegt mit einem Schweißflansch 18 von außen her am Schwellerinnenstahlblech 6 bei der Schweißverbindung 16 an.

Das Schwellerinnenstahlblech 6 ist nach unten mit einem Überstand 19 verlängert, an dem mit einer Nietverbindung 20 durch eine Vollstanznietung über einen Nietflansch 21 ein Unterbodenaluminiumblech 22 angeschlossen ist.

### Bezugszeichenliste

- 1: Fahrzeug karosserieaufbau
- 2: A-Säule
- 3: Schweller
- 4: A-Säulen-Unteninnenstahlblech
- 5: A-Säulen-Untenaußenstahlblech
- 6: Schweller-Innenstahlblech
- 7: Hutstahlprofil
- 8: Hutrand
- 9: Hutrand
- 10: Schulter
- 11: Türdichtflansch
- 12: Hutdecke
- 13: Stirnwand
- 14: Schweißverbindung
- 15: Schweißverbindung
- 16: Schweißverbindung
- 17: Schweißverbindung
- 18: Schweißflansch
- 19: Überstand
- 20: Nietverbindung
- 21: Nietflansch
- 22: Unterbodenaluminiumblech
- 23: Fortsatz
- 24: erste Y-Fläche
- 25: zweite Y-Fläche

## Patentansprüche

1. Fahrzeugkarosserieaufbau im Bereich A-Säule unten und Schweller,
mit jeweils einer A-Säule (2) an beiden Karosserieseiten, welche in ihrem Säulenaufbau im Schwellerbereich ein etwa vertikal und in Fahrzeuglängsrichtung (Y-Fläche) ausgerichtetes A-Säulen-Unteninnenstahlblech (4) und ein A-Säulen-Untenaußenstahlbiech (5) aufweist, und
mit einem angeschlossenen Schweller (3) als Längshohlträger mit einem darin aufgenommenem längsverlaufenden Schwellerverstärkungsprofil, wobei als Schwellerverstärkungsprofil ein Hutstahlprofil (7) mit den Huträndern (8, 9) außen an einem Schweller-Innenstahlblech (6) des Schwellers (3) verbunden ist,
**dadurch gekennzeichnet,**
**dass** das Schweller-Innenstahlblech (6) eine Schwellerinnenfläche aufweist, die fluchtend zur Fläche des A-Säulen-Unteninnenstahlblechs (4) als erste Schubfläche (erste Y-Fläche 24) verläuft, und
**dass** das Schweller-Innenstahlblech (6) an der Oberseite nach außen in der Breite der Hutprofilhöhe zu einer etwa horizontal verlaufenden Schulter (10) und anschließend zu einem vertikalen nach oben stehenden Türdichtflansch (11) gebogen ist, wobei die vertikal ausgerichtete Hutdecke (12) des Hutstahlprofils (7) fluchtend zur Türflanschfläche des im A-Säulen-Untenaußenstahlbtechs (5) weitergeführten Türdichtflansches (11) als zweite Schubfläche (zweite Y-Fläche 25) verläuft.

2. Fahrzeugkarosserieaufbau nach Anspruch 1, **dadurch gekennzeichnet, dass** das Schweller-Innenstahlblech (6) im oberen Bereich vom A-Säulen-Unteninnenstahlblech (4) übergriffen wird und darunter das Schweller-Innenstahlblech (6) mit einem Fortsatz (23) bis zu einer vorzugsweise aus Aluminiumblech hergestellten Stirnwand (13) in Längsrichtung fluchtend weitergeführt ist.

3. Fahrzeugkarosserieaufbau nach Anspruch 1 oder 2, **dadurch gekennzeichnet, dass** das Schweller-Innenstahlblech (6) aus warmgeformtem Stahl und das A-Säulen-Unteninnenstahlblech (4) das A-Säulen-Untenaußenstahlblech (5) und das Hutstahlprofil (7) aus höherfestem Stahl hergestellt sind.

4. Fahrzeugkarosserieaufbau nach einem der Ansprüche 1 bis 3, **dadurch gekennzeichnet, dass** die Verbindungen zwischen dem SchwellerInnenstahlblech (6) und dem A-Säulen-Unteninnenstahlblech (4) dem A-Säulen-Untenaußenstahlblech (5) und dem Hutstahlprofil (7) als Schweißverbindungen, vorzugsweise durch Widerstands-Punkt-Schweißen hergestellt sind.

5. Fahrzeugkarosserieaufbau nach Anspruch 4, **dadurch gekennzeichnet, dass** die Schweißverbindungen (14, 15, 16, 17) in der Höhe (Z-Achse) am Schweller-Innenstahlblech (6) entzerrt und insbesondere die weiteren Schweißverbindungen (14, 16) höhenversetzt zu den Schweißverbindungen (15, 17) der Hutränder (8, 9) des Hutstahlprofils (7) liegen.

6. Fahrzeugkarosserieaufbau nach Anspruch 4, **dadurch gekennzeichnet, dass** das A-Säulen-Untenaußenstahlblech (5) am Hutstahlprofil (7) anliegend und dieses nach unten übergreifend unterhalb des unteren Hutrandes (9) am Schweller-Innenstahlblech (6) mit einem Schweißflansch (18) anliegt und dort durch Widerstands-Punkt-Schweißen festgelegt ist, und
dass darüberhinaus das Schweller-Innenstahlblech (6) nach unten mit einem Überstand (19) vorsteht, an dem durch Nietverbindungen (20), vorzugsweise durch Vollstanznieten ein Unterbodenaluminiumblech (22) mit einem Nietflansch (21) angeschlossen ist.

## Claims

1. Vehicle bodywork structure in the region of the lower A-pillar and sill,
comprising an A-pillar (2) on each of the two bodywork sides which, in its pillar structure in the sill region, has a substantially vertical A-pillar lower inner steel sheet (4) oriented in the vehicle longitudinal direction (Y surface) and an A-pillar lower outer steel sheet (5), and
comprising a connected sill (3) as a longitudinal hollow beam comprising a longitudinally extending sill reinforcement profile that is accommodated therein, a steel top hat profile (7) being connected as the sill reinforcement profile to the sill inner steel sheet (6) of the sill (3) with the top hat edges (8, 9) outside,
**characterised in that**
the sill inner steel sheet (6) has a sill inner surface that extends in alignment with the surface of the A-pillar lower inner steel sheet (4) as a first thrust surface (first Y-surface 24), and
**in that** the top of the sill inner steel sheet (6) is bent outwardly along the width of the top hat profile height to form a substantially horizontally extending shoulder (10) and then to form a vertically upright door sealing flange (11), the vertically orientated top hat cover (12) of the steel top hat profile (7) extending in alignment with the door sealing surface of the door sealing flange (11) continued in the A-pillar lower outer steel sheet (5) as a second thrust surface (second Y-surface 25).

2. Vehicle bodywork structure according to claim 1, **characterised in that** the sill inner steel sheet (6) is overlapped in the upper region by the A-pillar lower inner steel sheet (4), and therebelow the sill inner steel sheet (6) is continued by means of an extension (23) as far as an end wall (13) that is preferably produced from aluminium sheet and aligned in the longitudinal direction.

3. Vehicle bodywork structure according to either claim 1 or claim 2, **characterised in that** the sill inner steel sheet (6) is produced from thermoformed steel, and the A-pillar lower inner steel sheet (4), the A-pillar lower outer steel sheet (5) and the steel top hat profile (7) are produced from high-strength steel.

4. Vehicle bodywork structure according to any of claims 1 to 3, **characterised in that** the connections between the sill inner steel sheet (6) and the A-pillar lower inner steel sheet (4), the A-pillar lower outer steel sheet (5) and the steel top hat profile (7) are produced as welded joints, preferably by resistance spot welding.

5. Vehicle bodywork structure according to claim 4, **characterised in that** the welded joints (14, 15, 16, 17) are rectified in terms of height (Z-axis) on the sill inner steel sheet (6) and, in particular, the other welded joints (14, 16) are offset in terms of height from the welded joints (15, 17) of the top hat edges (8, 9) of the steel top hat profile (7).

6. Vehicle bodywork structure according to claim 4, **characterised in that** the A-pillar lower outer steel sheet (5), in abutment with the steep top hat profile (7) and downwardly overlapping said profile below the lower top hat edge (9), abuts the sill inner steel sheet (6) via a welding flange (18) and is fixed at that point by resistance spot welding, and
**in that** the sill inner steel sheet (6) additionally projects downwardly via a protrusion (19) on which a base aluminium sheet (22) is connected by means of rivet connections (20), preferably by means of solid punch rivets, to a rivet flange (21).

## Revendications

1. Structure de carrosserie de véhicule dans la zone de la colonne A, partie inférieure et seuil de porte,
avec, respectivement, une colonne A (2) des deux côtés de la carrosserie, qui présente dans sa structure de colonne, dans la zone du seuil de porte, une tôle d'acier interne basse (4) de la colonne A orientée dans la direction longitudinale du véhicule (surface Y) et une tôle d'acier externe basse (5) de la colonne A, et
avec un seuil de porte (3) raccordé sous la forme d'un longeron creux ayant un profilé de renfort de seuil s'étendant longitudinalement qui y est reçu, où, comme profilé de renfort de seuil, un profilé chapeau d'acier (7) avec les ailes de chapeau (8, 9) est raccordé extérieurement sur une tôle d'acier interne (6) du seuil de porte (3),
**caractérisée en ce que** :
la tôle d'acier interne (6) du seuil de porte présente une surface interne de seuil de porte qui s'étend dans l'alignement avec la surface de la tôle d'acier interne basse (4) comme première surface de poussée (première surface Y 24) et
la tôle d'acier interne (6) du seuil de porte est cintrée au sommet vers l'extérieur sur la largeur de la hauteur du profilé chapeau pour former un épaulement (10) s'étendant plus ou moins horizontalement qui se fond en un rebord d'étanchéité de porte vertical (11) se dressant vers le haut, dans lequel la base de chapeau (12) orientée verticalement du profilé d'acier chapeau (7) s'étend dans l'alignement avec la surface du rebord d'étanchéité de porte (11) prolongé dans la tôle d'acier externe basse (5) de la colonne A comme seconde surface de poussée (seconde surface Y 25).

2. Structure de carrosserie de véhicule selon la revendication 1, **caractérisée en ce que** la tôle d'acier interne (6) du seuil de porte est recouverte dans la zone supérieure par la tôle d'acier interne basse (4) du seuil de porte et, en dessous, la tôle d'acier interne (6) du seuil de porte se poursuit dans l'alignement par un prolongement (23) jusqu'à une paroi avant (13) fabriquée de préférence en tôle d'aluminium dans la direction longitudinale.

3. Structure de carrosserie de véhicule selon la revendication 1 ou la revendication 2, **caractérisée en ce que** la tôle d'acier interne (6) du seuil de porte est fabriquée en acier thermoformé et la tôle d'acier interne basse (4) de la colonne A, la tôle d'acier externe basse (5) de la colonne A et le profilé chapeau d'acier (7) sont fabriqués en acier plus résistant.

4. Structure de carrosserie de véhicule selon l'une quelconque des revendications 1 à 3, **caractérisée en ce que** les liaisons entre la tôle d'acier interne (6) du seuil de porte et la tôle d'acier interne basse (4) de la colonne A, la tôle d'acier externe basse (5) de la colonne A et le profilé chapeau d'acier (7) sont fabriqués sous la forme de joints soudés, de préférence par soudage par points.

5. Structure de carrosserie de véhicule selon la revendication 4, **caractérisée en ce que** les joints soudés (14, 15, 16, 17) sont corrigés en hauteur (axe Z) sur la tôle d'acier interne (6) du seuil de porte et, en particulier, les autres joints soudés (14, 16) sont décalés en hauteur par rapport aux joints soudés (15, 17) des ailes (8, 9) du profilé chapeau d'acier (7).

6. Structure de carrosserie de véhicule selon la revendication 4, **caractérisée en ce que** la tôle d'acier externe basse (5) de la colonne A s'applique sur le profilé chapeau d'acier (7) et celui-ci s'imbriquant vers le bas s'applique en dessous de l'aile de chapeau (9) sur la tôle d'acier interne (6) du seuil de porte avec un rebord de soudage (18) et y est fixé par soudage par points, et
**en ce que**, en outre, la tôle d'acier interne (6) du seuil de porte ressort vers le bas avec un porte-à-faux (19) sur lequel une tôle d'aluminium de dessous de caisse (22) est raccordée à un rebord de rivetage (21) au moyen de joints rivetés (20), de préférence par des rivets estampés pleins.
